(19) Europäisches Patentamt
European Patent Office
Office européen des brevets

(11) **EP 3 660 691 A1**

(12) **EUROPEAN PATENT APPLICATION**
published in accordance with Art. 153(4) EPC

(43) Date of publication:
**03.06.2020 Bulletin 2020/23**

(51) Int Cl.:
***G06F 13/38*** *(2006.01)*

(21) Application number: **18850322.1**

(22) Date of filing: **31.08.2018**

(86) International application number:
**PCT/CN2018/103595**

(87) International publication number:
**WO 2019/042421 (07.03.2019 Gazette 2019/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2017 CN 201710775636**

(71) Applicant: **Xi'an Zhongxing New Software Co., Ltd. Shaanxi 710114 (CN)**

(72) Inventor: **ZHANG, Jianchang Shenzhen Guangdong 518057 (CN)**

(74) Representative: **Baudler, Ron Canzler & Bergmeier Patentanwälte Partnerschaft mbB Friedrich-Ebert-Straße 84 85055 Ingolstadt (DE)**

(54) **METHOD, APPARATUS AND DEVICE FOR RATE ADJUSTMENT OF USB DATA TRANSMISSION, AND STORAGE MEDIUM**

(57) The present disclosure provides a rate adjustment method and a rate adjustment device for USB data transfer, and a device. The rate adjustment method for USB data transfer includes the following steps: acquiring rate data of data transfer with a USB host; determining whether a rate of the current data transfer jumps according to the rate data and a preset condition; and turning off corresponding pins in response to determining that the rate of the current data transfer jumps.

acquire rate data of data transfer with a USB host — 101

determine whether a rate of the current data transfer jumps according to the rate data and a preset condition — 102

turn off corresponding pins when it is determined that the rate of the current data transfer jumps — 103

Fig. 1

**Description**

**TECHNICAL FIELD**

The present disclosure relates to the field of Universal Serial Bus (USB) communication technology, and in particular, to a rate adjustment method and a rate adjustment device for USB data transfer, a device, and a storage medium.

**BACKGROUND**

As users' demands for high-definition videos and transfer rates are increasing, there are more and more terminals using USB 3.0.

Although USB 3.0 can increase a data transfer rate between a USB host and a USB device, there is a problem of USB 3.0 signal interference. The USB 3.0 signal interference affects stability of high-speed data transfer between the USB host and the USB device, may cause data interruption during high-speed data transfer, transfer mode switching, or the like, and may even make the network unusable.

**SUMMARY**

The present disclosure provides a rate adjustment method for USB data transfer, which is applied to a USB device, and includes the following steps: acquiring rate data of data transfer with a USB host; determining whether a rate of the current data transfer jumps according to the rate data and a preset condition; and turning off corresponding pins when it is determined that the rate of the current data transfer jumps.

The present disclosure further provides a rate adjustment device for USB data transfer, including a rate control module configured to acquire rate data of data transfer with a USB host, and determine whether a rate of the current data transfer jumps according to the rate data and a preset condition, and a switch module configured to turn off corresponding pins when the rate control module determines that the rate of the current data transfer jumps.

The present disclosure further provides a USB device, including a switch configured to control a signal transmission pin, data transfer through which is suspended when the switch is turned off; a memory which stores a rate adjustment program; and a processor configured to execute the rate adjustment program so as to perform the above rate adjustment method.

The present disclosure further provides a computer-readable storage medium having a program stored therein which, when executed by a processor, causes the process or to perform the rate adjustment method for USB data transfer according to the embodiments.

**BRIEF DESCRIPTION OF THE DRAWINGS**

The drawings are intended to provide further understanding of the present disclosure, and constitute a part of the specification of the present disclosure. The drawings, together with the embodiments of the present disclosure, are intended to explain the technical solutions of the present disclosure, but do not make any limitation to the technical solutions of the present disclosure.

Fig. 1 is a flowchart illustrating a rate adjustment method for USB data transfer according to an embodiment of the present disclosure;
Fig. 2 is a structural diagram of a rate adjustment device according to an embodiment of the present disclosure;
Fig. 3 is a schematic diagram of configuration of a rate adjustment device according to an embodiment of the present disclosure;
Fig. 4 is a flowchart illustrating a process of adjusting a data transfer rate between a USB device and a USB host by a rate adjustment device according to an embodiment of the present disclosure; and
Fig. 5 is a flowchart illustrating a data transfer rate adjustment process during communication between a terminal device and a USB host according to an embodiment of the present disclosure.

**DETAILED DESCRIPTION**

To make the objectives, technical solutions and advantages of the present disclosure clearer, the embodiments of the present disclosure will be described in detail below with reference to the accompanying drawings. It should be noted that the embodiments and features of the embodiments in the present disclosure may be arbitrarily combined with one another if no conflict is incurred.

The steps illustrated in the flowcharts of the drawings may be performed in a computer system such as a set of computer-executable instructions. In addition, although a logical order is illustrated in the flowchart, the steps illustrated or described may be performed in an order different from that described herein in some cases.

USB is a communication protocol that supports serial data transfer between a USB host and a USB device, with the USB host functioning as a calling part and the USB device functioning as a slave. USB uses four data transfer modes: control transfer, interrupt transfer, bulk transfer, and isochronous transfer. The control transfer is mainly used for transmitting control instructions and realizing USB specifications, and the isochronous transfer is mainly used for audio and video transmission. USB achieves device identification and driver loading via two bus enumerations (Enumeration and Renumeration). The host loads a corresponding device driver according to device identification, reassigns addresses, transfers control right to peripheral firmware, and implements functions of the peripheral through interactive communication between the peripheral firmware and the device driver and application programs in the host.

In some cases, the following three methods are provided for overcoming interruption of USB data transfer.

1. A switch is used for switching between USB 2.0 and USB 3.0. In this method, switching between a USB 2.0 transfer mode and a USB 3.0 transfer mode is mainly achieved by a USB rotary switch, and switching between circuits is achieved by disconnecting and connecting pin groups (for example, a first signal pin group, a second signal pin group and a power pin group of a USB interface), thereby realizing the switching between USB 2.0 and USB 3.0. With this method, the device can be switched to USB 2.0 when USB 3.0 is interfered so as to avoid that the user cannot use USB data transfer. However, a rotary switch needs to be added for applying this method, and the device cannot perform normal switching when the rotary switch is abnormal, which will make this method fail to overcome rate jumping or interruption caused by the interference problem of USB 3.0.

2. A plurality of factor protection modules are employed to prevent the rate jumping or interruption. In this method, interference is prevented mainly by using a plurality of modules such as a USB electric signal input interface module, an electric signal filtering module, a high voltage and electrostatic discharge protection module, an electromagnetic interference filtering module, and a high-frequency signal interference suppression module. This method solves the interference problem mainly by adding shielding signal means to hardware, but cannot solve the interference problem under the condition of keeping long-time high-speed uploading and downloading.

3. An insulator and a metal housing are employed to prevent the rate jumping or interruption. In this method, an insulator and a metal housing are used for a USB 3.0 connector to provide anti-interference protection for signals, and to isolate an interference source so as to achieve an anti-interference function. Similarly, this method solves the interference problem by adding anti-interference-materials to hardware, but cannot solve the interference problem under the condition of keeping long-time high-speed uploading and downloading.

In summary, the problem of rate jumping or data interruption caused by interference can be solved by adding the signal shielding modules or anti-interference materials to the hardware, but there are still at least four defects as follows:

firstly, the rotary switch can realize automatic switching between USB 2.0 and USB 3.0, but cannot avoid failure of normal switching by the device, data interruption in a switching process, and signal interference;

secondly, by adding the anti-interference materials, the problem of signal interference can be solved in terms of hardware, but normal signal transmission of the device may be affected;

thirdly, by adding an insulating coating on the hardware for isolation, the problem of signal interference may be solved to a certain extent, but product performance will be affected due to gradual aging of the hardware, and therefore, this method needs an improvement in stability thereof, and will increase production cost of the terminal; and

fourthly, interference usually occurs in certain frequency bands. In some cases, a single data transfer mode is generally employed, that is, either USB 2.0 or USB 3.0 is used, and USB 2.0 and USB 3.0 cannot be used simultaneously, so that requirements of higher rates of terminal cannot be met if USB 2.0 is used alone, while interference of USB 3.0 in the frequency bands cannot be avoided if USB 3.0 is used alone.

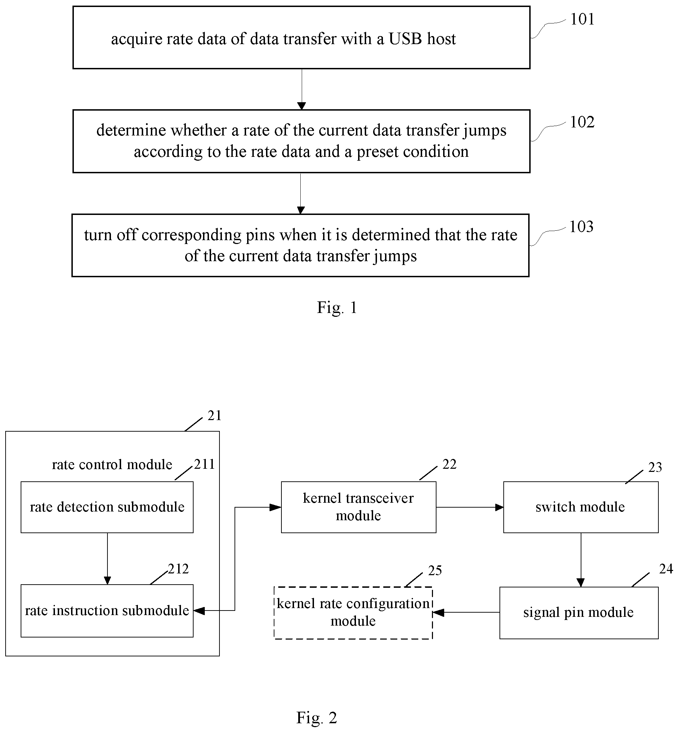

In view of the above, the present disclosure provides a rate adjustment method for USB data transfer, which is applied to a USB device provided with a switch for controlling a signal transmission pin, and data transfer through the signal transmission pin is suspended when the switch is turned off. As shown in Fig. 1, the rate adjustment method may include the following steps 101-103.

In step 101, rate data of data transfer with a USB host is acquired.

In step 102, it is determined whether a rate of the current data transfer jumps according to the rate data and a preset condition.

In step 103, corresponding pins are turned off when it is determined that the rate of the current data transfer jumps.

According to an embodiment of the present disclosure, if it is determined that the rate of the current data transfer does not jump in step 102, it is possible to return to step 101 to continue to acquire new transfer data, or terminate the current process.

According to the embodiment of the present disclosure, control is mainly performed on the USB 3.0 transfer modes. Specifically, a switch is added for a USB 3.0 lower pin pair (a pin pair formed by a pin for receiving a signal and a pin for sending a signal) in terms of hardware, and a switch of USB 3.0 to the pin pair is turned off in terms of software layer to terminate data transfer of the pin pair so as to achieve an effect of controlling a rate, so that the rate interruption caused by the switching between USB 3.0 and USB 2.0 is avoided, and a problem of unstable rates caused by signal interference can also be solved.

In practical application, USB 3.0 uses two pairs of pins, and an effect of reducing a rate can be achieved by turning off or turning on one pair of pins according to the embodiments of the present disclosure, so that the rate interruption caused by the switching between USB 3.0 and USB 2.0 is avoided, and the problem of unstable rates caused by signal interference can also be solved.

According to the embodiments of the present disclosure, turning off the corresponding pins may be implemented in a plurality of ways. In one implementation way, the step of controlling a hardware layer to turn off the corresponding pins when it is determined that the rate of the current data transfer jumps may include the following steps: transmitting a rate reduction message, which is used to instruct a kernel layer to reduce a data transfer rate, to the kernel layer when it is determined that the rate of the current data transfer jumps, and controlling the hardware layer by the kernel layer to turn off the corresponding pins. In this way, the pins can be turned off by means of software control. In another implementation way, the way of turning off the corresponding pins may include controlling an application layer to call a corresponding system function to turn off the signal transmission of one pair of pins when a rate jump is detected, thereby achieving rate reduction.

In one implementation way, the step of acquiring rate data of data transfer with a USB host may include the following steps: monitoring data transmitted with a USB host in real time, and acquiring a specified amount of rate data within a specified time.

In one implementation way, the step of determining whether a rate of the current data transfer jumps according to the rate data and a preset condition may include the following steps: obtaining a change rate of a rate of the current data transfer according to the rate data; and comparing the change rate of the rate with a preset rate change threshold, and determining that the rate of the data transfer jumps when the change rate of the rate is not lower than the rate change threshold. In this way, the corresponding pins can be turned off when a relatively large change of the rate is detected, so that the interference in the frequency bands is eliminated and the rate is prevented from being reduced greatly, thereby avoiding the data interruption.

In one embodiment, network data may be monitored in real time. Specifically, the network data may be sampled within a certain period of time; and after the data within a period of time is sampled, a change rate or a maximum value of a data transfer rate is calculated, and it is determined that the data transfer rate jumps when the change rate or the maximum value of the rate reaches a preset threshold,.

For example, 10 pieces of rate data are collected within 10 minutes: $v_1$, $v_2$, $v_3$, $v_4$, $v_5$, $v_6$, $v_7$, $v_8$, $v_9$, $v_{10}$ and an average $\bar{v}$ of the 10 pieces of rate data is calculated, i.e.,

$$\bar{v} = \frac{v_1 + v_2 + v_3 + v_4 + v_5 + v_6 + v_7 + v_8 + v_9 + v_{10}}{10} ;$$ and

then the average $\bar{v}$ and the 10 pieces of rate data are subjected to variance calculation, i.e.,

$$s^2 = \frac{\sum (v - \bar{v})^2}{10} ,$$ where

the variance $s^2$ may represent a change rate of a rate over the 10 minutes. Then, it is determined whether the rate jumps according to the variance $s^2$. For example, if a variance threshold is preset to 10, it is determined that the rate jumps when the currently calculated variance $s^2$ is greater than 10, and it is determined that the rate does not jump when the currently calculated variance $s^2$ is less than or equal to 10.

In one implementation way, the step of determining whether a rate of the current data transfer jumps according to the rate data and a preset condition may include the following steps: obtaining a maximum rate value of the current data transfer according to the rate data; comparing the maximum rate value with a preset maximum rate threshold, and determining that a rate of the data transfer jumps when the maximum rate value reaches the maximum rate threshold. In this way, the corresponding pins can be turned off when it is detected that the rate exceeds a certain value in a certain frequency band, so that the interference in the frequency bands is eliminated and the rate is prevented from being reduced greatly, thereby avoiding the data interruption.

For example, when frequency band scanning is chosen to perform in an LTE mode, a highest theoretical value of data transfer rate does not exceed 300M, that is, a preset maximum rate threshold is 300M, and the rate will be reduced if a current maximum rate value exceeds 300M.

In one implementation way, after the step of controlling the hardware layer to turn off the corresponding pins, the following steps may be further included according to the embodiment of the present disclosure: determining whether the rate of the current data transfer needs to be increased according to the rate data and a rate condition set by a user; and turning on corresponding pins when it is determined that the rate of the current data transfer needs to be increased. In this way, the data transfer rate can be increased by turning on the corresponding pins when needed.

Turning on the corresponding pins may also be implemented in a plurality of ways. In one implementation way, the way of turning on the corresponding pins includes: transmitting a rate increase message, which is used to instruct the kernel layer to reduce a data transfer rate, to the kernel layer when it is determined that the rate of the current data transfer needs to be increased, and controlling the hardware layer by the kernel layer to turn on the corresponding pins. In another implementation way, the way of turning on the corresponding pins may include controlling the application layer to call a corresponding system function to turn on the signal transmission of one pair of pins when a rate jump is detected, thereby achieving an increase of rate.

For example, when a user needs a higher downlink transfer rate, the rate may be switched to be higher than a theoretical value of 300M according to a rate condition set by the user, and the rate is adjusted by turning on pins.

In the embodiment of the present disclosure, the step of sending the rate reduction message or the rate increase message to the kernel layer may be implemented by using register messages.

In one implementation way, after the step of turning off the corresponding pins, the following step may be further included: performing rate mode configuration by the kernel layer according to status of each pin in the hardware layer. In this way, it is ensured that data transfer between a USB device and a USB host can be performed at a corresponding rate.

In practical application, when a USB device is plugged into a USB host system for the first time, a default speed transfer mode is adopted, the default speed transfer mode being an actively-reported speed transfer mode adaptively selected according to whether a host controller of the USB host system is USB 2.0 or USB 3.0. The present disclosure is mainly applied to scenarios using the USB 3.0 transfer modes.

The pin pairs described in the present disclosure mainly refer to MicB_SSTX and MicB_SSRX (a pair of differential signal lines) pin pairs, for example, it is possible to use MicB_SSTX- and MicB_SSRX+ or use MicB_SSTX+ and MicB_SSRX- as the pin pairs described in the present disclosure.

According to the embodiment of the present disclosure, automatic rate adjustment can be realized in both hardware and software, the data interruption caused by the switching process can be avoided, and the rate can be automatically adjusted according to user requirements of the current transfer. Timely adjustment can reduce the CPU and power consumption of a terminal, prolong service life of the terminal, improve reliability of the terminal, and avoid restart or crash of the terminal during long-time high-speed operation.

The present disclosure further provides a rate adjustment device for USB data transfer, which is applicable to a USB device. As shown in Fig. 2, the rate adjustment device may include a rate control module 21 and a switch module 23.

The rate control module 21 is configured to acquire rate data of data transfer with a USB host, and determine whether a rate of the current data transfer jumps according to the rate data and a preset condition.

The switch module 23 is configured to turn off corresponding pins when the rate control module determines that the rate of the current data transfer jumps.

In one implementation way, the rate adjustment device may further include a kernel transceiver module 22 and a signal pin module 24. The rate control module 21 is further configured to transmit a rate reduction message, which is used to instruct a kernel layer to reduce a data transfer rate, to the kernel transceiver module 22 when it is determined that the rate of the current data transfer jumps. The kernel transceiver module 22 is configured to receive the rate reduction message from the rate control module 21, and send a rate reduction instruction to the switch module according to the rate reduction message.

The switch module 23 is configured to send a turn-off instruction to the signal pin module 24 after receiving the rate reduction instruction from the kernel transceiver module.

The signal pin module 24 is configured to perform configuration operation on the corresponding pins according to the turn-off instruction, so as to turn off the corresponding pins.

In one implementation way, the rate control module 21 is further configured to determine whether the rate of the current data transfer needs to be increased according to the rate data and a rate condition set by a user.

The switch module 23 is further configured to turn on corresponding pins when the rate control module 21 determines that the rate of the current data transfer needs to be increased.

Specifically, the rate control module 21 is further configured to transmit a rate increase message, which is used to instruct the kernel layer to reduce a data transfer rate, to the kernel transceiver module 22 when it is determined that the rate of the current data transfer needs to be increased; the kernel transceiver module 22 is further configured to receive the rate increase message from the rate control module 21, and send a rate increase instruction to the switch module according to the rate increase message; the switch module 23 is further configured to send a turn-on instruction to the signal pin module 24 after receiving the rate increase instruction from the kernel transceiver module 22; and the signal pin module 24 is further configured to perform configuration operation on the corresponding pins according to the turn-on instruction, so as to turn on the corresponding pins.

In one implementation way, the rate adjustment device may further include a kernel rate configuration module 25 configured to perform rate mode configuration according to a current on/off status of each pin.

In one implementation way, the rate control module 21 may include a rate detection submodule 211 and a rate instruction submodule 212. The rate detection submodule 211 is configured to acquire rate data of data transfer between a USB device and a USB host; the rate instruction submodule 212 is configured to determine whether a rate of the current data transfer jumps according to the rate data and a preset condition, and transmit a rate reduction message to the kernel transceiver module when it is determined that the rate of the current data transfer jumps. In addition, the rate instruction submodule 212 is further configured to determine whether the rate of the current data transfer needs to be increased according to the rate data and a rate condition set by a user; and transmit a rate increase message, which is used to instruct the kernel layer to reduce a data transfer rate, to the kernel transceiver module when it is determined that the rate of the current data transfer needs to be increased. In this way, the rate can be reduced to an optimal state when high-speed USB data transfer is not needed according to speed requirements of a current network and user requirements, which does not affect normal use of the user, avoids that the user cannot continue to use the network or the rate does not meet the user requirements, and improves the service life, stability and robustness of the terminal.

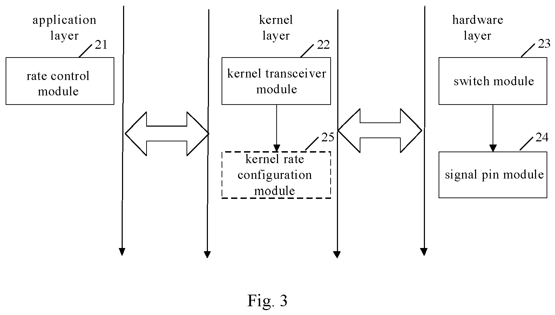

Fig. 3 is a schematic diagram of configuration of the rate adjustment device. As shown in Fig. 3, the rate control module 21 is built in an application layer, the kernel transceiver module 22 and the kernel rate configuration module 25 are built in a kernel layer, and the switch module 23 and the signal pin module 24 are built in a hardware layer. In this way, the rate adjustment device, which is not influenced by a host system, can be formed, and can automatically control and adjust a data transfer rate of a terminal, so as to achieve optimal matching of rate and power consumption, and finally produce the effects of prolonging service life of the terminal and reducing probability of over-temperature burnout of a chip without affecting normal access to the Internet by a user.

In one implementation way, the rate control module 21 may be installed in a USB host, and if the rate control module 21 is installed in a target host, the functions of the rate control module 21 can be achieved by being installed once. In another implementation way, it is possible not to install the rate control module in the host, but the rate control module 21 may be configured as a software part rather than being installed separately in the host, so as to avoid incompatibility between the rate control module 21 and the USB host system; and in this way, automatic rate adjustment can be realized during internal communication between the rate control module 21 and the kernel transceiver module 22.

In an embodiment of the present disclosure, before performing rate adjustment, it is necessary to establish communication and perform data transfer between the USB host and the USB device. Specifically, after the USB device is plugged into the USB host, the related modules in the kernel layer and the hardware layer complete initialization along with the start of a USB device system, the kernel transceiver module and the kernel rate configuration module in the kernel layer perform configuration according to USB standard protocols and some protocols of NIC (Network Interface Card) types, so that, after the USB terminal is plugged into the host, the USB host and the USB device negotiate a rate mode according to communication protocols, so as to perform data communication in the rate mode.

Initialization of the rate control module in the application layer and initialization of a kernel of the USB host are separately completed, the USB device performs configuration according to rates supported by the USB host, and finally adapts to a rate mode, and the USB device and the USB host establish communication and carry out data transfer.

After the USB device is plugged into the USB host, the USB host can detect the plugging of the USB device and then perform device enumeration according to the requirements of an operating system of the host. When the initialization of the USB device is completed in a short time, initializations of the rate control module in the application layer, the kernel transceiver module, and an intelligent switch in the hardware layer are completed. After those initializations are completed, the rate control module may perform communication connection with the kernel transceiver module.

In practical application, a process of completing the initialization of the rate control module 21 is mainly a process of presetting the rate control module in the USB host or the USB device. In the embodiment of the present disclosure, the rate control module 21 is preset in the USB device system and can be initialized along with the initialization of the USB device system.

In the embodiment of the present disclosure, the rate control module 21 and the kernel transceiver module 22 establish communication connection via network communication. For example, the communication between the rate control module 21 and the kernel transceiver module 22 may use register messages.

In the embodiment of the present disclosure, after the configuration of the kernel rate configuration module is completed, it is necessary to report a ready state of the kernel to a data link layer, so as to ensure normal downloading and uploading.

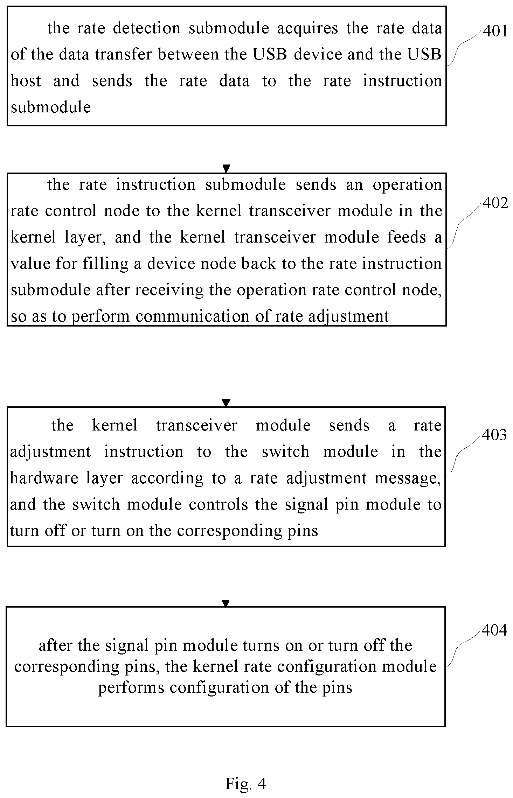

In an embodiment of the present disclosure, the rate control device can achieve automatic rate adjustment through the following process. As shown in Fig. 4, the process of achieving automatic rate adjustment by the rate control device may include the following steps 401-404.

In step 401, the rate detection submodule acquires the rate data of the data transfer between the USB device and the USB host and sends the rate data to the rate instruction submodule.

In step 402, the rate instruction submodule sends an operation rate control node to the kernel transceiver module in the kernel layer, and the kernel transceiver module feeds a value for filling a device node back to the rate instruction submodule after receiving the operation rate control node, so as to perform communication of rate adjustment.

The operation rate control node can be used to perform message passing between the kernel layer and the application layer.

In step 403, the kernel transceiver module sends a rate adjustment instruction (e.g., a rate increase instruction or a rate reduction instruction) to the switch module in the hardware layer according to a rate adjustment message (e.g., a rate increase message or a rate reduction message) from the rate instruction submodule, and the switch module controls the signal pin module to turn off or turn on the corresponding pins.

In step 404, after the signal pin module turns on or turns off the corresponding pins, the kernel rate configuration module performs configuration of the pins, and then performs adjustment and adaption of the rate.

For other details of the embodiment of the present disclosure, reference may be made to the above embodiments.

The present disclosure further provides a USB device, including a switch configured to control a signal transmission pin, data transfer through which is suspended when the switch is turned off; a memory which stores a rate adjustment program; and a processor configured to execute the rate adjustment program so as to perform the rate adjustment method according to each embodiment.

Exemplary implementation ways of the above embodiments will be described in detail below. It should be noted that the following examples may be arbitrarily combined. In practical application, the above embodiments may be implemented in other ways, and all the processes and execution processes in the following examples may be adjusted according to actual needs in practical application.

The present disclosure further provides a computer-readable storage medium having a program stored therein which, when executed by a processor, causes the processor to perform the rate adjustment method for USB data transfer according to the embodiments.

The process of presetting the rate control module in the host system is illustrated in detail below by two examples.

In one example, the process of presetting the rate control module in the host system may include steps 1-3.

In step 1, the rate control module is stored in an optical disc of the USB device or integrated into a host function driver, or the user is automatically reminded by a push notification to download and install a program of the rate control module.

In step 2, the USB device is plugged into the USB host, the rate control module is automatically installed while installing the optical disc or the host function driver, or the user manually downloads and installs the rate control module, the initialization of the rate control module is performed, and a corresponding rate adjustment program is automatically started.

In step 3, after the initialization of the rate control module is completed, a value is written to a character node created in the kernel layer, and is read and judged by the kernel layer, and then USB rate configuration is performed, so as to establish normal communication connection between the USB device and the USB host.

Specifically, the rate control module sends a node operation instruction to the kernel layer, the kernel layer returns a value to the rate control module after receiving the instruction, and the rate control module establishes communication connection with the kernel layer after receiving the instruction.

In the other example, a process of implementing rate adjustment during data transfer between the USB device and the USB host is described in detail by taking a terminal device as an example. It should be noted that the following process is only exemplary implementation, and the present disclosure may be implemented through other processes in other examples or embodiments.

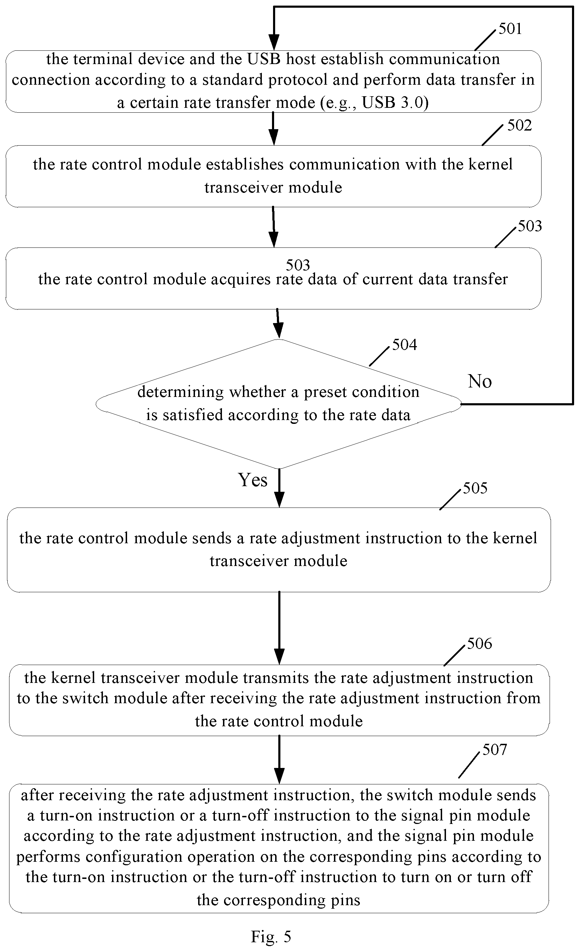

As shown in Fig. 5, when the USB device is a terminal device, a process of adjusting a rate during data transfer between the terminal device and the USB host may include the following steps S501 to S507.

In step S501, the terminal device is plugged into the USB host for the first time, and the terminal device and the USB host establish communication connection according to a standard protocol and perform data transfer in a certain rate transfer mode (e.g., USB 3.0).

Specifically, the USB host establishes data and control pipes according to configuration information reported by the terminal device, and further establishes Interfaces (for example, Interrupt Bulk IN/OUT Pipe connection) communication of the rate transfer mode. In this way, the terminal device normally works in the rate transfer mode, and the terminal device and the host complete rate configuration and carry out data transfer.

In step S502, the rate control module establishes communication with the kernel transceiver module.

Specifically, after the terminal device and the USB host complete the rate configuration, the rate control module in a system of the terminal device can operate some character attribute nodes in a function driver of kernel layer, the character attribute nodes of the kernel are functions owned by the kernel itself, and nodes to be controlled can be added to the function driver of kernel layer. The rate control module performs assignment on the nodes after the initialization of the rate control module is completed, and the function driver of kernel layer returns a success identification to the rate control module when receiving the assignment. In this way, the rate control module establishes communication with the kernel transceiver module.

In step S503, the rate control module acquires rate data of current data transfer.

In step S504, the rate control module determines whether a preset condition is satisfied according to the rate data of the current data transfer, step S506 is performed if any one of data amount and the rate data satisfies the preset condition, and the current process is directly ended or step S503 is performed if neither of the data amount and the rate data satisfies the preset condition.

Reference may be made to the above description for a process of determining whether a rate change and/or the data amount satisfy the preset condition, and thus the process will not be repeated herein.

In step S505, the rate control module sends a rate adjustment instruction to the kernel transceiver module.

In step S506, the kernel transceiver module transmits the rate adjustment instruction to the switch module after receiving the rate adjustment instruction from the rate control module.

In step S507, after receiving the rate adjustment instruction, the switch module sends a turn-on instruction or a turn-off instruction to the signal pin module according to the rate adjustment instruction, and the signal pin module performs configuration operation on the corresponding pins according to the turn-on instruction or the turn-off instruction to turn on or turn off the corresponding pins.

After receiving the rate adjustment instruction from the rate control module, the switch module determines that signal transmission pins need to be turned on in the case that the rate adjustment instruction is a rate increase instruction, and sends a turn-on instruction accordingly; and the switch module determines that the signal transmission pins need to be turned off in the case that the rate adjustment instruction is a rate reduction instruction, and sends a turn-off instruction accordingly.

Specifically, the switch module may send the turn-on instruction or turn-off instruction to the signal pin module by means of interruption, and the signal pin module performs configuration operation of data and control pipes on the pair of pins according to the turn-on instruction or turn-off instruction, so as to turn on or turn off the pair of pins.

In one implementation way, the signal pin module may perform the configuration operation in a way that: after interruption triggered by signals corresponding to a MicB_SSTX- line and a MicB_SSRX- line are detected by the kernel, a corresponding device tree (i.e., some functions and attributes of the device) is automatically searched for to find a corresponding tree node, the node is modified to turn off or turn on interrupt response of the pair of pins, corresponding endpoint configuration is set after the interrupt response is detected by the kernel to turn off or turn on resource request or release of a related endpoint, the request for resource or the release of resource allows a corresponding signal to be reported to a USB functional layer, in response to which the USB functional layer perform configuration of transfer size and buffer and then perform rate configuration, and finally automatic configuration of the kernel is successfully completed and the kernel communicates with the USB host accordingly.

It should be noted that the USB host may be a computer, a Customer Premise Equipment (CPE) or a mobile terminal.

According to the above examples, once data interruption occurs due to signal interference during the use of the USB host system and the terminal device, the rate of the terminal device may be configured. Thus, the kernel configuration module performs configuration according to the rate mode adapted by other modules of the system to complete terminal device enumeration and rate transfer mode configuration of the device, the USB device adapts a rate mode suitable for the USB host, so as to establish Interfaces (Interrupt Bulk IN/OUT Pipe connection) communication of the transfer mode configured after adjusting the rate. Therefore, the device can normally work in a currently configured rate mode, which produces the effect of allowing the user to continue to surf the Internet or avoiding data disconnection.

The present disclosure may be applied to any device or application scenario using USB 3.0, such as a CPE using USB 3.0. The present disclosure may also be applied to other USB 3.0 or WIFI devices. That is to say, if a device supports USB 3.0 or needs a USB 3.0 interface, the technical problem of data interruption due to signal interference can be solved by the technical solutions of the present disclosure, thereby improving the service life of the device and user experience.

It should be understood by those skilled in the art that all or part of the steps of the above method may be performed by instructing associated hardware (e.g., a processor) with programs which may be stored in a computer-readable storage medium, such as a read-only memory, a magnetic disk or an optical disc. All or part of the steps of the above embodiments may also be performed by using one or more integrated circuits. Accordingly, each module/unit in the above embodiments may be implemented in the form of hardware, for example, by using an integrated circuit to perform corresponding functions of the module/unit, or may be implemented in the form of software function module, for example, by using a processor to execute programs/instructions stored in a memory to perform the corresponding functions of the module/unit. The present disclosure is not limited to any specific combination of hardware and software.

The basic principles, main features and advantages of the present disclosure are illustrated and described above. However, the present disclosure is not limited to the above embodiments, since the above description of the embodiments and the specification are merely for explaining the principles of the present disclosure. Without departing from the spirit and scope of the present disclosure, various changes and modifications may be made to the present disclosure, and should be considered to fall within the protection scope of the appended claims.

**Claims**

1. A rate adjustment method for USB data transfer, which is applied to a USB device, comprising following steps:

   acquiring rate data of data transfer with a USB host;
   determining whether a rate of the current data transfer jumps according to the rate data and a preset condition; and
   turning off corresponding pins in response to determining that the rate of the current data transfer jumps.

2. The method of claim 1, wherein the step of turning off corresponding pins in response to determining that the rate of the current data transfer jumps comprises following steps:
   transmitting a rate reduction message, which is configured to instruct a kernel layer to reduce a data transfer rate, to the kernel layer in response to determining that the rate of the current data transfer jumps, and controlling a hardware layer by the kernel layer to turn off the corresponding pins.

3. The method of claim 1, wherein,
   the step of acquiring rate data of data transfer with a USB host comprises following steps: monitoring data transmitted with the USB host in real time, and acquiring a specified amount of rate data within a specified time.

4. The method of claim 1, wherein the step of determining whether a rate of the current data transfer jumps according to the rate data and a preset condition comprises following steps:

   obtaining a change rate of the rate of the current data transfer according to the rate data; and
   comparing the change rate of the rate with a preset rate change threshold, and determining that the rate of the data transfer jumps in response to the change rate of the rate being not lower than the rate change threshold.

5. The method of claim 1, wherein the step of determining whether a rate of the current data transfer jumps according to the rate data and a preset condition comprises following steps:

   obtaining a maximum rate value of the current data transfer according to the rate data; and
   comparing the maximum rate value with a preset maximum rate threshold, and determining that the rate of the data transfer jumps in response to the maximum rate value reaching the maximum rate threshold.

6. The method of claim 1, after the step of turning off corresponding pins, further comprising:

   determining whether the rate of the current data transfer needs to be increased according to the rate data and a rate condition set by a user; and
   turning on the corresponding pins in response to determining that the rate of the current data transfer needs to be increased.

7. The method of claim 6, wherein the step of turning on the corresponding pins in response to determining that the rate of the current data transfer needs to be increased comprises following steps:
   transmitting a rate increase message, which is configured to instruct a kernel layer to reduce a data transfer rate, to the kernel layer in response to determining that the rate of the current data transfer needs to be increased; and
   controlling a hardware layer by the kernel layer to turn on the corresponding pins.

8. The method of claim 1, after the step of turning off corresponding pins, further comprising a step of:
   performing rate mode configuration by a kernel layer according to status of each pin in a hardware layer.

9. A rate adjustment device for USB data transfer, comprising a rate control module and a switch module, wherein,
   the rate control module is configured to acquire rate data of data transfer with a USB host, and determine whether a rate of the current data transfer jumps according to the rate data and a preset condition, and
   the switch module is configured to turn off corresponding pins in response to the rate control module determining that the rate of the current data transfer jumps.

**10.** The rate adjustment device of claim 9, further comprising:

a kernel transceiver module configured to receive a rate reduction message from the rate control module, and send a rate reduction instruction to the switch module according to the rate reduction message; and

a signal pin module configured to perform configuration operation on the corresponding pins according to a turn-off instruction, so as to turn off the corresponding pins, wherein,

the switch module is further configured to send the turn-off instruction to the signal pin module after receiving the rate reduction instruction from the kernel transceiver module; and

the rate control module is further configured to transmit the rate reduction message, which is used to instruct a kernel layer to reduce a data transfer rate, to the kernel transceiver module in response to determining that the rate of the current data transfer jumps.

**11.** A USB device, comprising:

a switch configured to control a signal transmission pin, wherein, when the switch is turned off, data transfer through the signal transmission pin is suspended;

a memory configured to store a rate adjustment program; and

a processor configured to execute the rate adjustment program to perform the rate adjustment method of any one of claims 1 to 8.

**12.** A computer-readable storage medium having a program stored therein which, when executed by a processor, causes the processor to perform the rate adjustment method for USB data transfer according to any one of claims 1 to 8.

| acquire rate data of data transfer with a USB host | 101 |

$\downarrow$

| determine whether a rate of the current data transfer jumps according to the rate data and a preset condition | 102 |

$\downarrow$

| turn off corresponding pins when it is determined that the rate of the current data transfer jumps | 103 |

Fig. 1

**rate control module** 21, 211

| rate detection submodule |

$\downarrow$

| rate instruction submodule | 212

| kernel transceiver module | 22

| switch module | 23

| kernel rate configuration module | 25

| signal pin module | 24

Fig. 2

Fig. 3

the rate detection submodule acquires the rate data of the data transfer between the USB device and the USB host and sends the rate data to the rate instruction submodule — 401

the rate instruction submodule sends an operation rate control node to the kernel transceiver module in the kernel layer, and the kernel transceiver module feeds a value for filling a device node back to the rate instruction submodule after receiving the operation rate control node, so as to perform communication of rate adjustment — 402

the kernel transceiver module sends a rate adjustment instruction to the switch module in the hardware layer according to a rate adjustment message, and the switch module controls the signal pin module to turn off or turn on the corresponding pins — 403

after the signal pin module turns on or turn off the corresponding pins, the kernel rate configuration module performs configuration of the pins — 404

Fig. 4

the terminal device and the USB host establish communication connection according to a standard protocol and perform data transfer in a certain rate transfer mode (e.g., USB 3.0) /501

the rate control module establishes communication with the kernel transceiver module /502

503
the rate control module acquires rate data of current data transfer /503

determining whether a preset condition is satisfied according to the rate data /504 — No

Yes

the rate control module sends a rate adjustment instruction to the kernel transceiver module /505

the kernel transceiver module transmits the rate adjustment instruction to the switch module after receiving the rate adjustment instruction from the rate control module /506

after receiving the rate adjustment instruction, the switch module sends a turn-on instruction or a turn-off instruction to the signal pin module according to the rate adjustment instruction, and the signal pin module performs configuration operation on the corresponding pins according to the turn-on instruction or the turn-off instruction to turn on or turn off the corresponding pins /507

Fig. 5

## INTERNATIONAL SEARCH REPORT

| International application No. |
|---|
| **PCT/CN2018/103595** |

| A. | CLASSIFICATION OF SUBJECT MATTER |
|---|---|

G06F 13/38(2006.01)i

According to International Patent Classification (IPC) or to both national classification and IPC

| B. | FIELDS SEARCHED |
|---|---|

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, CNKI, WPI, EPODOC: 数据, 传输, 速率, 速度, 控制, 调节, 设置, 调整, 跳变, 预设, 条件, 关, 引脚, interface, circuit, universal, serial, bus, storage, device, speed , detect+, rate, USB

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 101727421 A (SEMICONDUCTOR MANUFACTURING INTERNATIONAL (SHANGHAI) CORPORATION) 09 June 2010 (2010-06-09) description, paragraphs [0024]-[0066], figures 1-5, and claims 1-10 | 1-12 |
| A | CN 104731746 A (SHANGHAI HUAHONG INTEGRATED CIRCUIT CO., LTD.) 24 June 2015 (2015-06-24) entire document | 1-12 |
| A | CN 1392480 A (VIA TECHNOLOGIES, INC.) 22 January 2003 (2003-01-22) entire document | 1-12 |
| A | CN 101441612 A (RESEARCH IN MOTION LTD.) 27 May 2009 (2009-05-27) entire document | 1-12 |
| A | US 2012117294 A1 (LINEAR TECHNOLOGY INC.) 10 May 2012 (2012-05-10) entire document | 1-12 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 October 2018** | **23 November 2018** |

| Name and mailing address of the ISA/CN | Authorized officer |
|---|---|
| **State Intellectual Property Office of the P. R. China No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT
**Information on patent family members**

| International application No. |
| --- |
| **PCT/CN2018/103595** |

| Patent document cited in search report | | | Publication date (day/month/year) | Patent family member(s) | | | Publication date (day/month/year) |
| --- | --- | --- | --- | --- | --- | --- | --- |
| CN | 101727421 | A | 09 June 2010 | US | 2010106869 | A1 | 29 April 2010 |
| CN | 104731746 | A | 24 June 2015 | None | | | |
| CN | 1392480 | A | 22 January 2003 | None | | | |
| CN | 101441612 | A | 27 May 2009 | DE | 602007001594 | D1 | 27 August 2009 |
| | | | | EP | 2107469 | A1 | 07 October 2009 |
| | | | | EP | 2107468 | A1 | 07 October 2009 |
| | | | | EP | 1995666 | A1 | 26 November 2008 |
| | | | | AT | 528716 | T | 15 October 2011 |
| | | | | CA | 2631955 | A1 | 24 November 2008 |
| US | 2012117294 | A1 | 10 May 2012 | TW | 201229771 | A | 16 July 2012 |
| | | | | CN | 102591826 | A | 18 July 2012 |
| | | | | EP | 2450801 | A1 | 09 May 2012 |

Form PCT/ISA/210 (patent family annex) (January 2015)